# EUROPEAN PATENT APPLICATION

(11) **EP 3 326 464 A1**
(43) Date of publication of application: **30.05.2018**
(21) Application number: 17380024.4
(22) Date of filing: 23.11.2017
(51) Int. Cl.: A01N 31/08, A01N 37/04, A01N 25/04, A01N 61/02, A01N 25/00, A01P 7/02

(54) **MULTIFACTORIAL ECO-FRIENDLY COMPOSITION AND PROCEDURE FOR TREATING VARROOSIS IN HONEYBEE COLONIES USING A RAPID APPLICATION SYSTEM THAT DOES NOT REQUIRE HIVE OPENING**

(30) Priority: 25.11.2016 ES 201601005
(71) Applicant: Martínez, Agustín Arias, 19200 Guadalajara (ES)
(72) Inventor: Martínez, Agustín Arias, 19200 Guadalajara (ES)

(57) **Abstract**

Multifactorial eco-friendly composition and procedure for treating varroosis in honeybee colonies using a rapid application system that does not require hive opening.

The composition contains food-grade petroleum jelly, oxalic acid and thymol in varying proportions adapted to the requirements of differing climatic zones and stages of honeybee colony development. It is applied by spreading it with a toothed utensil on a semirigid bearer provided with a scale used to adjust the dose to the state of development of the hive and to the time of application. It is inserted into the hive via the entrance and is provided with a flange that remains outside the hive to facilitate handling. It is the bees themselves that, by walking on the composition, spread it throughout the hive, achieving 100% efficacy without permitting development of resistance to the treatment, as it attacks the parasite on multiple fronts

It therefore represents a new paradigm in the battle against varroosis in honeybees.

## Description

### TECHNICAL FIELD

The present invention pertains to the field of treatments to combat varroosis in honeybee colonies.

The principal object of the present invention is a composition that facilitates treatment of varroosis in honeybee colonies by attacking the parasite on a multitude of fronts, that prevents the development of resistance to treatment, that uses natural substances, that does not leave residues in the honey, that does not have seasonal restrictions on use and that can be applied to the hive without the need to open it, thereby reducing the amount of labour involved in application.

### BACKGROUND ART

Many products have been developed by laboratories and companies to treat varroosis in bee colonies. These treatments can be classified into two groups: synthetic acaricides and organic acaricides.

### Synthetic products

The format in which acaricides are principally available is that of strips of plastic of varying compositions in which the acaricides are incorporated during manufacture. The active principle is held within the plastic and is released in differing ways and over differing time spans according to each product. In some cases, this makes it necessary to increase the dose of the active principle as part of it is retained within the plastic. Amitraz, coumaphos and fluvalinate are the most widely used active principles.

These treatments are applied by inserting the plastic strips in the hives between the brood frames. Once they are no longer effective, it is necessary to remove them to prevent, to the extent possible, the development of resistance to the active principle.

In order to maximise product efficacy, the usage instructions of most of the products commercially available recommend applying the product without a brood in the hive. Currently, no 100%-effective acaricides exist.

As synthetic acaricides are generally highly toxic, and in order to prevent the presence of residues in the honey, application time is restricted and is limited to times of year in which there is no nectar flow to the hive.

### Organic products

Oxalic acid is currently used to treat varroosis in honeybees. It can be applied in two ways: by sublimating the acid by heating it, which generates toxic fumes for the beekeeper and requires use of high-efficacy protective masks; or by dissolving the acid in sugared distilled water and spraying it onto the bees, which lowers the temperature in the brood nest and has the consequent negative impact on its cohesion.

Thymol is applied in gel carriers that offer a limited range of application temperatures, as application at high temperatures may cause the bees to abandon the hive.

Some compositions use strips of cardboard or pieces of vermiculite as the carrier.

One of the disadvantages of both synthetic and organic acaricides is the amount of labour required to apply them, as to insert them it is necessary to open the hive, a task conditioned by factors such as ambient temperature and time of day and, above all, by the amount of labour required to insert and subsequently remove the acaricides. Given the size of honey farms in Spain, which can comprise 500, 1,000, 2,000 or even 10,000 hives, the labour costs are significant.

In addition to the above, both synthetic and organic acaricides are currently applied singly. This limits their efficacy and favours the development of resistance to the products by the varroa mite. These issues are resolved by the present patent application, which adopts a multifactorial approach to combating varroosis and employs a simple, rapid, economical and reusable application system.

Products currently available on the market include:
Thymovar, Laboratorios Hi Farma X. Active principle: thymol (in a wafer placed on the frames). Application is restricted to temperatures between 15 and 35 °C.

Apiguard, Laboratorios Ecuphar. Active principle: thymol (in a gel matrix). Two treatments per hive, 15 days apart.

Apitraz 8, Laboratorios Calier. Format: strips containing 500 mg of amitraz. Honey cannot be harvested until 6 weeks after application of the treatment.

Apivar, Laboratorios Santamix. Format: strips containing 500 mg of amitraz.

Maqs, Laboratorios NOD Europe. Active principle: formic acid (68.2 g). Use restricted to temperatures between 10 and 29.5 °C.

Apilife var, Laboratorios Beta Tec. Active principle: thymol.

Apitraz, Comercial Veterinaria. Format: strips containing 500 mg of amitraz.

Apistan, Laboratorios Esteve. Format: strips containing 0.8 g of fluvalinate.

Checkmite, Laboratorios Bayer. Format: strips containing 1.36 g of coumaphos.

Oxalic acid applied by drip or spray.

Oxalic acid applied by sublimation.

### SUMMARY OF INVENTION

Multifactorial eco-friendly composition and procedure for treating varroosis in honeybee colonies using a rapid application system that does not require hive opening.

The present patent application relates to a multifactorial composition and procedure for treating varroosis in honeybees that combines a composition of various active principles with a rapid, economical, eco-friendly and reusable application system. The composition contains food-grade petroleum jelly, oxalic acid and thymol in varying proportions adapted to the requirements of differing climatic zones and stages of honeybee colony development. It is applied to the hive by spreading it with a toothed utensil on a semirigid bearer, made of impermeable plastic, which includes a scale used to adjust the dose to the state of the hive and the time of year of application and which is inserted into the hive via the entrance. The bearer is provided with a flange that remains outside the hive to facilitate application of the treatment, removal of the bearer and, if necessary, replenishment of the active composition. As the composition is applied to an impermeable bearer, full use is made of it. It is the bees themselves that, after walking on the composition and having their instinct for cleanliness triggered, spread it throughout the hive, achieving 100% efficacy without permitting the development of resistance to the treatment, as it attacks the parasite on multiple fronts.

As well as acting as the excipient, the food-grade petroleum jelly has an acaricide effect, as when the bees attempt to remove the product they cover themselves in a fine layer of petroleum jelly which, while innocuous to the bees, obstructs the spiracles of the parasite, causing its death.

Oxalic acid has been shown to be an effective acaricide. However, the application methods currently used have severe disadvantages. For example, when it is applied by sublimation the beekeeper needs to wear a high-efficacy gas mask, as well as needing to have the means available in the apiary to generate the electricity and heat required to produce the gas. Similarly, spraying the oxalic acid on the bees severely affects their exoskeleton. Moreover, both systems only remain active for a short period of time and are therefore of limited efficacy.

In its current form of use, thymol, which is also marketed by some laboratories as a treatment for varroosis, is highly aggressive to bees, in some cases causing them to abandon the hive.

The method of application that is the object of the present patent application eliminates the issues associated with separate application of each of the above products whilst achieving significant efficacy from the synergy between them and providing a simple application procedure that does not require beekeepers to take special precautions other than wearing latex gloves.

The product that is the object of the present patent application effectively overcomes the disadvantages of the products employed to date and offers a broad usage range as regards both time of year and state of biological development of the hive.

It also attacks the parasite on multiple fronts, thereby raising its effectiveness to practically 100% and, most importantly, doing so at a low cost and without producing resistance in the parasite. The application method is simple, fast and effective and does not disturb the bees or require the opening of the hive.

It therefore represents a new paradigm in the battle against varroosis in honeybees. It is based on a multifactorial attack on the parasite and achieves unprecedented synergies that deliver results that are superior to those of any of the methods known and used today, doing so at a very low cost and with an ease of use that minimises the amount of labour required during application.

The composition can be marketed in tube format to facilitate its storage, application and dosing.

### ADVANTAGEOUS EFFECTS OF INVENTION

The present invention offers two advantageous effects due, firstly, to its composition and, secondly, to the bearer used to apply it.
As regards the composition, this will be manufactured by suitably qualified laboratories, marketed to beekeepers, and may be packaged in tubes to facilitate dosing, as stated in the claims.
As regards the product bearers, these will be made by manufacturers of plastic products.

## Claims

1. Composition for treating and controlling varroosis in honeybee colonies, **characterised by** containing various active principles concurrently and deployed by means of a rapid, economical, eco-friendly and reusable application system. The composition contains food-grade petroleum jelly, oxalic acid and thymol in varying proportions adapted to the requirements of differing climatic zones and stages of honeybee colony development. It is applied to the hive by spreading it with a toothed utensil on a semirigid bearer, made of impermeable plastic, which includes a scale used to adjust the dose to the state of the hive and the time of year of application and which is inserted into the hive via the entrance. The bearer is provided with a flange that remains outside the hive to facilitate application of the treatment, removal of the bearer and, if necessary, replenishment of the active composition. As the composition is applied to an impermeable bearer, full use is made of it. It is the bees themselves that, after walking on the composition and having their instinct for cleanliness triggered, spread it throughout the hive, achieving 100% efficacy without permitting the development of resistance to the treatment, as it attacks the parasite on multiple fronts.

2. Composition for treating and controlling varroosis in honeybee colonies, **characterised by** containing multiple agents that combat the varroa mite by means of multifactorial action.

3. Composition for treating and controlling varroosis in honeybee colonies, as per the claims above, likewise **characterised by** containing food-grade petroleum jelly that, in addition to acting as the excipient, has an acaricide effect, as when the bees attempt to remove the product they cover themselves in a fine layer of petroleum jelly which, while innocuous to the bees, obstructs the spiracles of the parasite, causing its death.

4. Composition for treating and controlling varroosis in honeybee colonies, as per the claims above, likewise **characterised by** containing oxalic acid, in varying proportions, which acts as an acaricide with a different mechanism of action to the one above.

5. Composition for treating and controlling varroosis in honeybee colonies, as per the claims above, likewise **characterised by** containing thymol, in varying proportions, which in addition to acting as an acaricide, triggers the honeybees' instinct for cleanliness and produces contact between the bees and the acaricide composition.

6. Composition for treating and controlling varroosis in honeybee colonies, as per the claims above, likewise **characterised by** containing differing percentages of its components to adapt its action to differing climatic conditions, it being possible to produce formulations for cold, warm, hot or tropical zones and for different times of year.

7. Composition for treating and controlling varroosis in honeybee colonies, as per the claims above, likewise **characterised by** being effective even in the presence of broods, unlike current methods which recommend application without a brood in the hive in order to achieve suitable efficacy.

8. Composition for treating and controlling varroosis in honeybee colonies, as per the claims above, likewise **characterised by** being composed solely of organic products, because of which it does not leave residues in the wax or honey.

9. Composition for treating and controlling varroosis in honeybee colonies, as per the claims above, likewise **characterised by** not producing resistance to the treatment in mites, as it attacks them on multiple fronts.

10. Composition for treating and controlling varroosis in honeybee colonies, as per the claims above, likewise **characterised by** the possibility of placing the product on the market in tubes, which would facilitate adjustment of the dose applied to the hive to the state of the colony, achieved by adjusting the length of the bead of composition placed on the bearer.

11. Composition for treating and controlling varroosis in honeybee colonies, as per the claims above, likewise **characterised by** being inserted into the hive via the entrance so that the bees, on entering and leaving the hive during their daily foraging, walk on the formula and carry it on their legs and hairs to every corner of the hive, thereby spreading its acaricide action throughout the colony.

12. Composition for treating and controlling varroosis in honeybee colonies, as per the claims above, likewise **characterised by** application not being restricted to certain climatic conditions, times of year or times of day, it being possible to apply it to hives at any time and under any circumstances without disturbing or harming the bees.

13. Composition for treating and controlling varroosis in honeybee colonies, as per the claims above, likewise **characterised by** being applied by spreading it on an inert plastic base, the dimensions of which vary according to hive type.

14. Composition for treating and controlling varroosis in honeybee colonies, as per the claims above, likewise **characterised by** being spread on the inert plastic base using toothed spatulas of differing weights so as to adjust the dose of the composition to the specific treatment requirements of the hive of honeybees at the time of application.

15. Composition for treating and controlling varroosis in honeybee colonies, as per the claims above, likewise **characterised by** being applied directly to the bearer by the beekeeper at the moment of application to the hive.

16. Composition for treating and controlling varroosis in honeybee colonies, as per the claims above, likewise **characterised by** its simplicity of use as the composition placed on the bearer is applied to the hive by inserting the bearer into the entrance.

17. Composition for treating and controlling varroosis in honeybee colonies, as per the claims above, likewise **characterised by** being placed on an inert plastic bearer provided with a scale used to adjust the dose of the acaricide composition to the specific state of development of the hive.

18. Composition for treating and controlling varroosis in honeybee colonies, as per the claims above, likewise **characterised by** the bearer used for application, which is provided with a flange that remains outside the hive after insertion to facilitate removal of the bearer, replenishment of the acaricide formula if a second application is required and removal of the bearer for storage and reuse once the treatment has been completed.

19. Composition for treating and controlling varroosis in honeybee colonies, as per the claims above, likewise **characterised by** its low cost.
